# DEMANDE DE BREVET EUROPEEN

(11) **EP 1 187 297 A1**
(43) Date de publication de la demande: **13.03.2002**
(21) Numéro de dépôt: 01402113.3
(22) Date de dépôt: 06.08.2001
(51) Int. Cl.: H02J 7/00

(54) **Procédé de charge d'une batterie**

(30) Priorité: 31.08.2000 FR 0011116
(71) Demandeur: ALCATEL, 75008 Paris (FR)
(72) Inventeur: Rouverand, Christophe, 78100 Saint Germain en Laye (FR); Lomba, Vincent, 92600 Asnieres sur Seine (FR)
(74) Mandataire: Lamoureux, Bernard

(57) **Abrégé**

Procédé de charge de batterie dont la fin de charge est déterminée par la variation de sa température comprenant les étapes consistant à :
- mesurer périodiquement la température de la batterie (E2) ainsi que la variation de température de la batterie par unité de temps;
- comparer cette variation de température par unité de temps (E3) :
   - d'une part, à un premier seuil (X+Y degrés Celsius par minute) correspondant à la variation de la température ambiante et de la température de la batterie, dans ce cas, arrêter le mode charge (E5);
   - d'autre part, à la variation de la température ambiante uniquement (X degrés Celsius par minute), dans ce cas comparer la variation de température de la batterie par unité de temps (E4) à un second seuil (Y degrés Celsius par minute), correspondant à la variation de la température de batterie uniquement; et arrêter le mode charge (E5).

## Description

La présente invention concerne un procédé de charge d'une batterie intégrée de type Nickel/métal hybride ou Nickel/cadmium, dont la fin de charge est déterminée par sa variation de température.

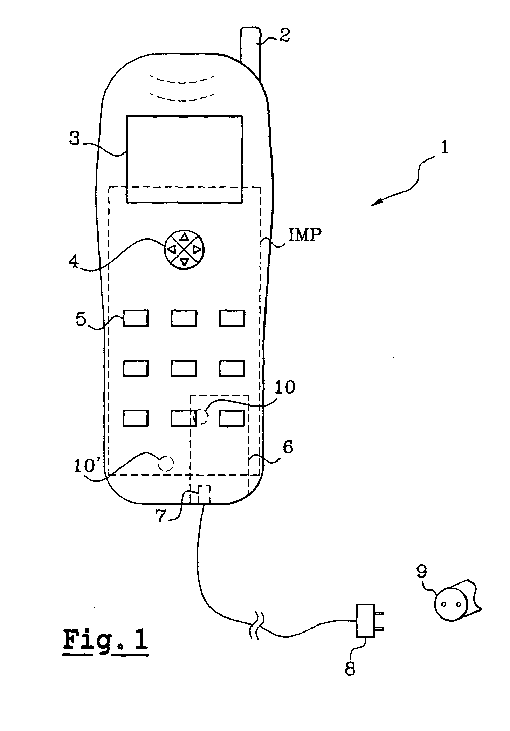

L'invention trouve une application particulièrement avantageuse dans le domaine des terminaux de radiocommunication, comme décrit à la figure 1.

La figure 1 montre en effet un terminal de radiocommunication 1 classique, comprenant essentiellement une antenne de réception 2, un écran 3, une touche de navigation 4 et un pavé de touches 5. Le terminal 1 comprend en plus une batterie 6 intégrée et une fiche de connexion 7 pour la connexion de la batterie 6 avec un chargeur de batterie 8. Le chargeur de batterie 8 est quant à lui prévu pour être connecté à une prise du secteur 9. Enfin, le terminal 1 comprend un circuit imprimé IMP pour accueillir l'ensemble des circuits du terminal de radiocommunication. Un moyen de mesure de la température de batterie 10 est disposé à l'intérieur de la batterie 6.

La batterie 6 est une batterie du type Nickel/Métal hybride ou Nickel/ Cadmium.

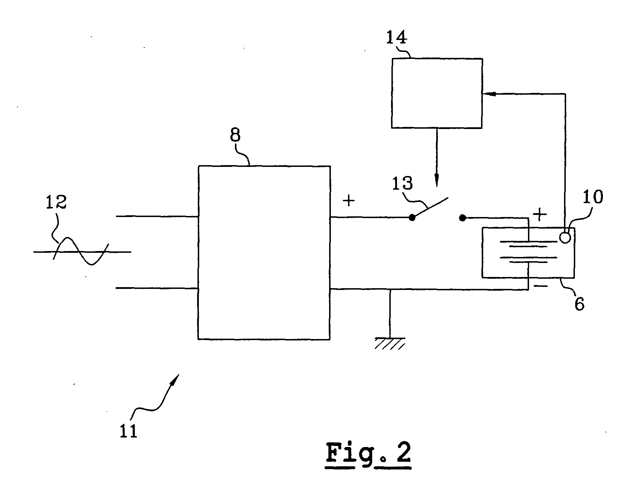

La détection de la fin de charge des batteries du type Nickel/métal hybride ou Nickel/cadmium met en oeuvre une mesure de pente thermique, représentative de l'évolution de la température de la batterie en fonction du temps, qui est typiquement de l'ordre de quelques degrés Celsius par minute. En effet, les batteries de ce type sont des batteries pour lesquelles la fin de charge est liée à la température des cellules les composant. Ainsi, quand la batterie arrive en fin de charge, la température des cellules composant la batterie augmente et la charge est arrêtée. Pour mettre en oeuvre l'ensemble de ces opérations permettant la détection de la fin de charge, le terminal de radiocommunication 1 comprend, de façon connue, un dispositif de charge qui est représenté à la figure 2.

La figure 2 montre un dispositif de charge 11 du terminal de radiocommunication 1, tel qu'il est mis en oeuvre dans l'art antérieur. Le dispositif de charge 11 comprend le chargeur 8 dont les deux bornes d'entrée sont reliées au secteur 12 par l'intermédiaire de la prise 9. Les deux bornes de sortie du chargeur 8 sont reliées à la batterie 6 par l'intermédiaire d'un interrupteur de charge 13. Le dispositif de charge comprend également un microprocesseur 14, relié au moyen de mesure de la température de batterie 10, pour commander la fermeture ou l'ouverture de l'interrupteur de charge 13, de manière à démarrer ou arrêter la charge de la batterie. Le moyen de mesure de la température de batterie 10 est disposé de façon avantageuse à l'intérieur de la batterie.

Le chargeur 8 met en oeuvre une double fonction de redressement et de filtrage afin d'obtenir, à partir du secteur 12, le courant et la tension appropriés pour la charge de la batterie 6.

Le moyen de mesure de la température 10 est prévu pour mesurer la température de batterie. Ainsi, le microprocesseur 14, à partir des informations sur la température de batterie issues du moyen de mesure 10, calcule la pente thermique de la batterie, représentative de l'évolution de la température de la batterie en fonction du temps. Lorsque la température des cellules composant la batterie augmente, le microprocesseur démarre ou arrête la charge de la batterie en commandant la fermeture ou l'ouverture de l'interrupteur de charge.

Or, l'évolution technologique des téléphones mobiles se traduit par une densité d'intégration accrue des composants, de manière à tendre vers une diminution significative de la taille des combinés.

Avec des combinés de très petite taille, la batterie est disposée très proche des composants et, par conséquent, le capteur thermique, destiné à mesurer l'évolution de la température liée à la charge de la batterie, va se trouver influencé par la dissipation de puissance des composants entourant la batterie. Cette dissipation de puissance entraîne une augmentation de la température ambiante, ou température externe de la batterie, qui va se répercuter sur la mesure de la température de la batterie. La température de la batterie augmente alors sans toutefois refléter la fin de charge de la batterie. Ainsi, l'influence de l'environnement de la batterie peut causer une détection de fin de charge erronée et, par conséquent, entraîner une charge défectueuse de la batterie.

Le document de brevet US-A-5 627 451 décrit un procédé qui permet de s'affranchir de l'influence de la température ambiante et ainsi, de prévenir une détection erronée de la fin de charge de la batterie. Afin de gérer le problème de l'environnement susceptible de parasiter la mesure de la température de la batterie, le procédé selon le brevet précité prévoit de prendre également en compte une mesure de la tension de la batterie. Ce procédé de contrôle de la charge d'une batterie consiste à mesurer, au cours de la charge, la variation de la tension de la batterie en fonction du temps, ΔV/Δt, et la variation de la température de la batterie en fonction du temps, ΔT/Δt. Si, au cours de la charge, une pente significative dans l'évolution de la température de la batterie en fonction du temps est détectée sans qu'un changement de la valeur ΔV/Δt ne soit détecté, la charge de la batterie continue jusqu'à ce que, d'une part, la variation de la tension en fonction du temps ΔV/Δt et, d'autre part, la variation de la température de la batterie en fonction du temps ΔT/Δt soient respectivement au moins supérieures à une variation prédéterminée de la tension de batterie par unité de temps et à une variation prédéterminée de la température de batterie par unité de temps.

Ce procédé implique donc de mettre en oeuvre un premier moyen de mesure pour la tension de la batterie et un deuxième moyen de mesure pour la température de la batterie. Cette solution nécessite également d'effectuer des mesures très précises dans le cas des batteries de type Nickel/métal hybride. En effet, pour les batteries de ce type, les variations de la tension en fonction du temps sont très faibles et il est alors difficile de détecter une pente de tension. Cette double nécessité rend le procédé selon le brevet précité coûteux.

D'autres procédés prévoient d'utiliser un premier capteur de température pour détecter les variations de la température ambiante et un deuxième capteur de température pour détecter les variations de la température liées à la charge de la batterie uniquement. La température de charge de la batterie est alors corrigée pour prendre en compte les modifications dues à l'environnement de la batterie.

Ce type de procédé présente encore l'inconvénient de devoir mettre en oeuvre deux capteurs de mesure, l'un deux étant situé à l'extérieur de la batterie.

Aussi, le problème technique à résoudre par l'objet de la présente invention est de pallier aux inconvénients de l'art antérieur en mettant en oeuvre un procédé simple et peu coûteux de détection thermique de la fin de charge d'une batterie type Nickel/métal hybride ou Nickel/cadmium, permettant de réduire l'influence de l'environnement de la batterie, cette détection se traduisant par un contrôle de l'évolution de la température de la batterie en fonction du temps au cours de sa charge.

A cet effet, la solution au problème technique posé consiste, selon la présente invention, à mettre en oeuvre un capteur de température unique au sein de la batterie pour mesurer, au cours de la charge de la batterie, les variations de température de la batterie en fonction du temps. Le rôle du capteur thermique est de détecter une première pente de valeur (X+Y) degrés Celsius par minute due à la fois à la dissipation de puissance des composants entourant la batterie et à l'augmentation de température des cellules de la batterie, puis, de détecter une seconde pente de valeur Y degrés Celsius dans l'évolution de la température de la batterie en fonction du temps, due cette fois uniquement à l'augmentation de température des cellules de la batterie signifiant la fin de charge.

Ainsi, la dissipation de puissance des composants est prise en compte par la détection d'une pente de valeur égale à X degrés Celsius par minute, et l'échauffement de la batterie signifiant la fin de charge est prise en compte par la détection d'une pente de valeur égale à Y degrés Celsius par minute. Les valeurs de pente X et Y sont prévues pour être réglables et sont dépendantes d'une part, du type de terminal de radiocommunication utilisé et, d'autre part, du type de batterie utilisé. Néanmoins, elles sont typiquement comprises dans une gamme de valeurs allant de quelques dixièmes de degré Celsius par minute à quelques degrés Celsius par minute. On peut prendre, par exemple, la valeur X égale à 0,5°C/minute et la valeur Y égale à 1°C/minute.

L'invention concerne donc un procédé de charge d'une batterie, dont la fin de charge est déterminée par sa variation de température, caractérisé en ce qu'il comprend les étapes suivantes consistant à :
a) entrer en mode charge;
b) mesurer périodiquement la température de la batterie;
c) mesurer la variation de température de la batterie par unité de temps;
d) comparer cette variation de température par unité de temps :
   d1) d'une part, à un premier seuil correspondant à la variation de la température ambiante et de la température de la batterie, dans ce cas :
      - arrêter le mode charge;
   d2) d'autre part, à la variation de la température ambiante uniquement, dans ce cas :
      - comparer la variation de température de la batterie par unité de temps à un second seuil correspondant à la variation de la température de batterie uniquement;
      - arrêter le mode charge.

L'invention concerne également un terminal de radiocommunication comprenant un circuit imprimé, un dispositif de charge, lequel dispositif de charge comprend un chargeur de batterie, relié d'une part, au secteur par l'intermédiaire d'une prise et, d'autre part, à une batterie par l'intermédiaire d'un interrupteur de charge, ainsi qu'un microprocesseur relié à un moyen de mesure de la température pour la commande dudit interrupteur de charge, caractérisé en ce que ledit microprocesseur est prévu pour mettre en oeuvre les étapes du procédé précité.

D'autres caractéristiques et avantages de l'invention apparaîtront plus clairement à la lecture de la description suivante d'un exemple particulier de réalisation en référence aux figures annexées, donné à titre d'exemple non limitatif, dans lesquelles :
- la figure 1, qui a déjà été décrite dans le préambule ci-dessus, montre un terminal de radiocommunication classique;
- la figure 2, qui a également déjà été décrite dans le préambule ci-dessus, montre un dispositif de charge de batterie mis en oeuvre de façon connue dans le terminal de radiocommunication décrit en référence à la figure 1;
- la figure 3 illustre les différentes étapes du procédé selon l'invention,
- la figure 4 montre une courbe représentative de l'évolution de la température de batterie en fonction du temps qui illustre le principe de détection de double pente selon l'invention.

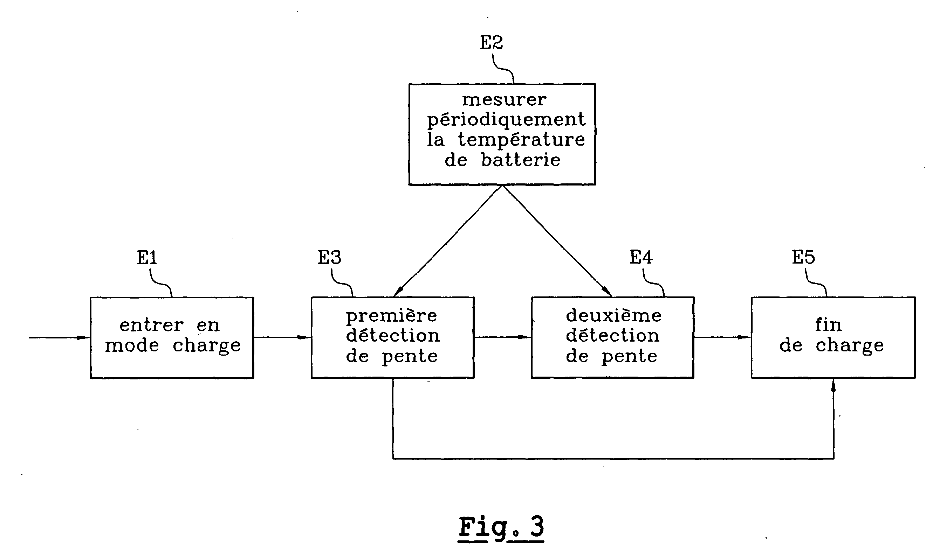

La figure 3 illustre donc les différentes étapes du procédé E1, E2, E3, E4 et E5 et montre leur enchaînement.

Une première étape E1 du procédé selon l'invention consiste à entrer en mode charge. En mode charge, la batterie reçoit le courant spécifié prévu pour charger la batterie. Ce courant de charge est reçu par l'intermédiaire d'un chargeur de batterie connecté à une prise du secteur par exemple. Le mode charge démarre après avoir validé que la batterie se trouve en état d'être chargée, c'est-à-dire qu'elle se trouve dans la bonne gamme de température et de tension.

Une deuxième étape E2 consiste à mesurer périodiquement la température de batterie. Pour ce faire, un moyen de mesure de la température, disposé à l'intérieur de la batterie, mesure périodiquement la température de la batterie. Ce moyen de mesure de la température peut par exemple être une résistance variable à coefficient de température négatif, c'est-à-dire dont la résistance diminue avec l'élévation de température. D'autres types de capteur thermique peuvent bien entendu être utilisés sans pour autant modifier le caractère de l'invention. De façon avantageuse, l'intervalle de temps qui sépare deux mesures de la température de batterie est de l'ordre de dix secondes. Le moyen de mesure relève donc la température de la batterie toutes les dix secondes. Néanmoins, on peut prévoir d'effectuer des relevés de température de batterie avec une fréquence plus élevée, de façon à obtenir une précision supérieure.

Une troisième étape E3 consiste à réaliser une première détection de pente de la variation de la température de batterie en fonction du temps, qui tient compte de la variation de la température ambiante.

Cette étape E3 permet de contrôler la variation de la température de batterie par unité de temps. Au cours de cette étape, on cherche à détecter une pente d'une valeur de (X+Y) degrés Celsius par minute, signifiant alors que la batterie est chargée. La valeur de cette pente tient compte d'une part, de l'augmentation de la température ambiante avec la valeur X degrés Celsius par minute et, d'autre part, de l'augmentation de la température de la batterie uniquement avec la valeur Y degrés Celsius par minute. Lorsque cette pente est détectée, la charge est arrêtée.

Si on détecte une pente de valeur X degrés Celsius par minute, on considère que la batterie n'est pas chargée puisque cette pente reflète uniquement l'augmentation de la température ambiante. La charge se poursuit alors. La détection de l'étape E3 est mise en oeuvre pendant une période de temps suffisante pour considérer que l'échauffement de l'environnement de la batterie est stabilisé. Cette période de temps est dépendante du type de terminal de radiocommunication utilisé.

L'étape E3 permet donc de contrôler la variation de la température de batterie par unité de temps, jusqu'à ce que cette variation atteigne un premier seuil, correspondant :
- d'une part, à la variation de la température ambiante et de la température de la batterie, la fin de charge est alors détectée,
- d'autre part, à la variation de la température ambiante uniquement, la fin de charge n'est alors pas détectée.

Dans le cas où une fin de charge est détectée au cours de cette étape, c'est-à-dire que la pente de (X+Y) degrés Celsius par minute a été détectée, le mode fin de charge est directement mis en oeuvre, à l'étape E5. Dans le cas contraire, où la batterie n'est pas chargée et que seule une augmentation de la température ambiante a été détectée, soit une détection d'une pente de valeur X degrés Celsius par minute, on passe à l'étape suivante du procédé, à l'étape E4, après une période de temps suffisante pour considérer que l'échauffement de l'environnement de la batterie est stabilisé.

Le seuil de détection de l'étape E3 peut être adapté pour tenir compte de la possibilité selon laquelle le terminal de radiocommunication entre en mode communication au cours de la charge de la batterie. En effet, lorsque le téléphone entre en mode communication, la dissipation de puissance des composants est plus importante et la température ambiante augmente significativement, parasitant ainsi davantage la mesure de la température de batterie. Dans ce cas, le seuil de détection de la première pente est fixé à une valeur plus élevée, c'est-à-dire que la valeur de pente X, représentative de la dissipation de puissance des composants, est augmentée.

Lorsque l'échauffement des composants est stabilisé et que la fin de charge n'a pas encore été détectée, une quatrième étape E4 met en oeuvre une deuxième détection de pente de la variation de la température de batterie en fonction du temps. Au cours de cette étape, on cherche à détecter une pente plus faible, de l'ordre de Y degré Celsius par minute, reflétant uniquement l'augmentation de la température de la batterie, indépendamment de l'influence de son environnement. En effet, grâce à la première détection mise en oeuvre à l'étape précédente E3, l'échauffement des composants est maintenant stabilisé. Cette deuxième détection est donc plus précise par rapport à la détection de l'étape précédente puisque la pente à détecter est plus faible.

L'étape E4 contrôle ainsi la variation de la température de batterie par unité de temps, jusqu'à ce que cette variation atteigne un deuxième seuil, correspondant à la variation de la température de batterie uniquement. Ce second seuil correspond à une pente détectée de Y degré Celsius par minute. Lorsque ce seuil est atteint, la batterie est considérée comme chargée de façon optimale. La détection réelle de fin de charge de la batterie est donc mis en oeuvre au cours de cette étape E4.

Il faut noter que les premier et second seuils de détection de fin de charge décrits plus haut, soient les valeurs de X et Y, sont réglables en fonction du type de batterie utilisée et également en fonction du type de terminal de radiocommunication utilisé. C'est en effet le type de terminal de radiocommunication qui va définir l'environnement de la batterie.

Enfin, une dernière étape E5 consiste à donner l'ordre de fin de charge. Le mode charge est arrêté lorsque la deuxième détection de pente de la variation de la température de batterie en fonction du temps a été effectuée. Il peut également être arrêté à l'issue de l'étape E3 si cette dernière a éventuellement permis de détecter que la batterie est chargée.

Les étapes du procédé décrites ci-dessus sont destinées à être mises en oeuvre par l'intermédiaire du microprocesseur 14 appartenant au dispositif de charge 11 du terminal de radiocommunication 1 décrit en référence aux figures 1 et 2.

Le procédé selon l'invention améliore donc la détection thermique de fin de charge évitant ainsi une détection de fin de charge de la batterie erronée, grâce au principe de la détection de double pente exposé ci-dessus.

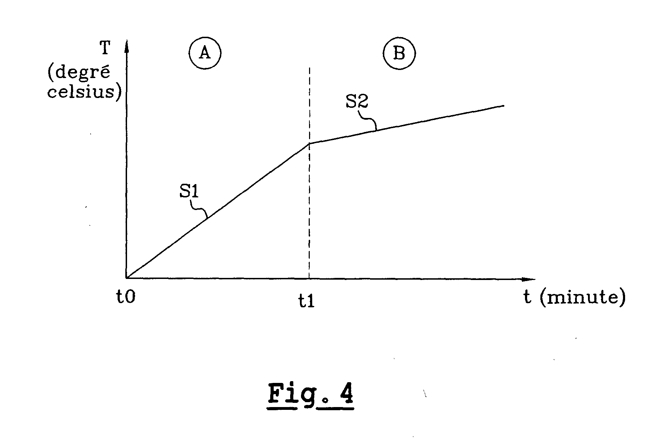

Ce principe est illustré à la figure 4 qui montre un graphique représentant l'évolution de la température de batterie T en fonction du temps t. Le temps t en minutes est représenté en abscisse, tandis que la température T en degrés Celsius est représentée en ordonnée. Le graphique représente deux parties distinctes A et B. La première partie A montre une courbe S1 délimitée entre les temps t0 et t1, tandis que la deuxième partie B montre une courbe S2 débutant à t1.

Au temps t0, le terminal de radiocommunication entre en mode charge. La première partie A du graphique illustre l'étape E3 du procédé décrite précédemment en référence à la figure 1. La courbe S1 présente une pente de valeur (X+Y) degrés Celsius par minute qui tient compte d'une part, de la dissipation de puissance des composants et, d'autre part, de l'échauffement de la batterie elle-même, dans le cas où la batterie est chargée, la charge est alors arrêtée. Dans le cas où la batterie n'est pas chargée, la pente de la courbe S1 de valeur égale à X degrés Celsius par minute est moins importante et est uniquement représentative de l'augmentation de la température ambiante, la détection de fin de charge se poursuit alors. La courbe S1 correspond donc au premier seuil de détection de la fin de charge de la batterie dans le cas d'une batterie chargée.

La partie B du graphique illustre l'étape E4 du procédé selon l'invention décrit précédemment en référence à la figure 3. La courbe S2 présente une pente de valeur égale à Y degrés Celsius par minute qui tient compte de l'augmentation de la température de la batterie uniquement, la température ambiante étant stabilisée. La pente de la courbe S2, de valeur égale à Y degrés Celsius par minute, est donc plus faible que celle de la courbe S1. La courbe S2 correspond au second seuil de détection de la fin de charge de la batterie. La détection de ce second seuil S2, correspondant à la pente de valeur Y degrés Celsius par minute, débute après une période de temps t1 au terme de laquelle l'échauffement des composants est stabilisé. Cette période de temps t1 est dépendante du type de terminal de radiocommunication utilisé et peut, dans la plupart des cas, correspondre à une dizaine de minutes.

Du fait de la prise en compte de la dissipation de puissance des composants entourant la batterie grâce à la détection de la première pente, la perturbation de la mesure de la température de batterie n'est plus un problème. Ainsi, le procédé selon l'invention permet une optimisation de la conception des terminaux de radiocommunication.

En référence à la figure 1, selon un autre mode de réalisation de l'invention, un moyen de mesure de la température de batterie 10', équivalent au moyen de mesure 10 déjà décrit, peut être disposé directement sur le circuit imprimé IMP du terminal de radiocommunication 1 au lieu d'être placé à l'intérieur de la batterie 6. Même si le moyen de mesure de la température 10' est alors placé encore plus proche des composants que lorsqu'il est à l'intérieur de la batterie 6, la détection de la première pente, tenant compte de l'échauffement de l'environnement de la batterie, autorise cette disposition.

## Revendications

1. Procédé de charge d'une batterie (6), dont la fin de charge est déterminée par sa variation de température, **caractérisé en ce qu'**il comprend les étapes suivantes consistant à :
a) entrer en mode charge (E1);
b) mesurer périodiquement la température de la batterie (E2);
c) mesurer la variation de température de la batterie par unité de temps;
d) comparer cette variation de température par unité de temps (E3) :
d1) d'une part, à un premier seuil (X+Y degrés Celsius par minute) correspondant à la variation de la température ambiante et de la température de la batterie, dans ce cas :
- arrêter le mode charge (E5);
d2) d'autre part, à la variation de la température ambiante uniquement (X degrés Celsius par minute), dans ce cas :
- comparer la variation de température de la batterie par unité de temps (E4) à un second seuil (Y degrés Celsius par minute), correspondant à la variation de la température de batterie uniquement;
- arrêter le mode charge (E5).

2. Procédé selon la revendication 1, **caractérisé en ce que** les premier et second seuils (X+Y degrés Celsius par minute, Y degrés Celsius par minute) sont réglables d'une part, en fonction du type de batterie utilisée et, d'autre part, en fonction de l'environnement de la batterie.

3. Procédé selon la revendication 1, **caractérisé en ce que** l'étape d1) est mise en oeuvre pendant une période de temps (t1) suffisante pour considérer que la température ambiante est stabilisée.

4. Procédé selon la revendication 1, **caractérisé en ce que** l'étape b) consiste à effectuer au moins une mesure de la température de batterie toutes les dix secondes.

5. Terminal de radiocommunication (1) comprenant un circuit imprimé (IMP), un dispositif de charge (11), lequel dispositif de charge (11) comprend un chargeur de batterie (8), relié d'une part, au secteur (12) par l'intermédiaire d'une prise (9) et, d'autre part, à une batterie (6) par l'intermédiaire d'un interrupteur de charge (13), ainsi qu'un microprocesseur (14) relié à un moyen de mesure de la température (10, 10') pour la commande dudit interrupteur de charge (13), **caractérisé en ce que** ledit microprocesseur (14) est prévu pour mettre en oeuvre les étapes du procédé selon la revendication 1.

6. Terminal de radiocommunication (1) selon la revendication 5, **caractérisé en ce que** le moyen de mesure de la température (10, 10') est une résistance variable à coefficient de température négatif.

7. Terminal de radiocommunication (1) selon la revendication 5 ou 6 **caractérisé en ce que** le moyen de mesure de la température (10) est disposé à l'intérieur de la batterie (6).

8. Terminal de radiocommunication (1) selon la revendication 5 ou 6 **caractérisé en ce que** le moyen de mesure de la température (10') est disposé directement sur le circuit imprimé (IMP) dudit terminal de radiocommunication (1).
